Europäisches Patentamt

European Patent Office

Office européen des brevets

(11) Publication number: **0 216 863 B1**

# EUROPEAN PATENT SPECIFICATION

(45) Date of publication of patent specification: **20.05.92**

(51) Int. Cl.⁵: **B29C 35/10**, C08F 10/02, D01D 5/12, D01F 6/04

(21) Application number: **86902242.6**

(22) Date of filing: **24.03.86**

(86) International application number:
**PCT/US86/00610**

(87) International publication number:
**WO 86/05739 (09.10.86 86/22)**

(54) **HIGH STRENGTH POLYMERIC FIBERS.**

(30) Priority: **01.04.85 US 718143**

(43) Date of publication of application:
**08.04.87 Bulletin 87/15**

(45) Publication of the grant of the patent:
**20.05.92 Bulletin 92/21**

(84) Designated Contracting States:
**AT BE CH DE FR GB IT LI NL SE**

(56) References cited:
EP-A- 0 164 779     EP-A- 0 167 187
CA-A- 676 039       GB-A- 1 308 912
GB-A- 1 362 793     JP-A- 5 627 318
US-A- 3 081 485     US-A- 3 563 870
US-A- 3 886 056     US-A- 4 226 905
US-A- 4 264 490

(73) Proprietor: **RAYCHEM CORPORATION (a Delaware corporation)**
**300 Constitution Drive**
**Menlo Park, California 94025(US)**

(72) Inventor: **KIANG, Joseph, Kai-Yuen**
**1227 St. Matthews Way**
**Los Altos, CA 94022(US)**
Inventor: **TSOU, Patrick, Kuo, Ching**
**704 Toulouse Court**
**Half Moon Bay, CA 94019(US)**
Inventor: **VOGDES, Christine, Ellen**
**11912 S.W. 12th Court**
**Davie, FL 33325(US)**

(74) Representative: **Jay, Anthony William et al**
**Raychem Limited Intellectual Property Law Department Faraday Road**
**Dorcan Swindon Wiltshire(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of producing a high strength fiber and to a high strength polyethylene fiber so produced.

For various uses, fibers having higher than usual strength are required. For example, the fibers used in fiber reinforced articles, and load bearing devices such as ropes, etc., should be strong. Typically the fibers used are of glass, carbon, steel or the like. For some uses it is desirable that the fiber also have the ability to deform or elongate. Polymeric fibers have the desirable elongation, however, commercially available, polymeric fibers generally have insufficient strength for many uses.

Various processes have been proposed in the art to improve the strength of polymeric fibers. One such process is a gel crystallization technique, another is solid state extrusion. These processes while they do provide polymeric fibers of improved strength are undesirably slow. Further, the fibers exhibit low elongation and are subject to irreversible creep when subjected to high forces.

Crosslinking of polymeric fibers by irradiation has been proposed. It has been found that if polymeric fibers are stretched to increase their strength by orientation and then irradiated the physical properties of the polymer tend to degrade. There are reports in the literature of cross-linking the polymeric material of the fibers before stretching. However, the technique employed in the prior art resulted only in a relatively modest improvement in the strength on the fibres, as shown, for example, in US-A-4264490.

This invention provides a method of producing high strength polymeric fibres having unique properties. The resulting fibers can be used for making fabrics and articles such as garments, and for producing reinforced articles such as fiber reinforced composites and the like. Further the fibers are heat-shrinkable, that is, on application of heat, generally to a temperature of about $T_1$ (as herein defined), the fibers shrink toward their undrawn dimension. The fibers thus can be used to produce heat-shrinkable articles and composites.

One aspect of this invention comprises a method of treating a fiber of polymeric material which comprises the steps of; (a) cross-linking the polymeric material; (b) heating the fiber; (c) drawing the fiber; and (d) cooling the fiber;

characterised by in step (b), heating the fiber to a temperature, $T_1$, which i) in the event the polymer is amorphous, is above the glass transition temperature, $T_g$, of the polymer and, ii) in the event the polymer is crystalline, is above the second order transition temperature, $T_c$, and below the crystalline melting temperature, $T_m$, of the polymer;

and in step (c), drawing the fiber to a draw ratio of at least about two at a rate of at least about 200% per minute; with the proviso that when the polymeric material is polyethylene, it has a molecular weight distribution (Mw/Mn) within the range from 2 to 10.

Another aspect of this invention provides a polyethylene fiber which (a) has a tensile strength of at least about 10152 kPa (70,000 psi), and (b) when subjected to a stress of 2175 kPa (15,000 psi) at 25°C for at least 1 hour, thereby causing the polymer to deform, is capable of substantially complete recovery to its undeformed configuration when said stress is removed.

Fig. 1 is a graph showing the effect of the order in which drawing and cross-linking takes place on the recovery stress exhibited by the fibers versus the degree of recovery at 150°C.

Fig. 2 is a graph showing the effct of the order in which drawing and cross-linking takes place on creep resistance of the fibers at 60°C after they have been recovered at 150°C to 85% of their drawn length.

Fig. 3 is a graph showing room temperature creep properties of polyethylene fibers of this invention compared to other polyethylene fibers. In particular it shows that when polyethylene fibers of this invention are subjected to a stress of 2175 kPa (15,000 psi) at 25°C for at least one hour causing the fiber to deform or creep and then are released from such stress, they are capable of substantially complete recovery while fibers not of this invention do not exhibit this property.

Fig. 4 is a graph showing room temperature creep properties of Tefzel fibers of this invention compared to other Tefzel fibers.

Fig. 5 is a graph showing room temperature creep properties of $PVF_2$ fibers of this invention compared to other $PVF_2$ fibers.

Fig. 6 is a graph showing room temperature creep properties of nylon fibers of this invention compared to other nylon fibers.

Fig. 7 is a graph showing the recovery force increase in fibers of this invention with increasing amounts of crosslinking promoter and higher draw ratios.

2

Detailed Description of the Invention

The fibers modified in accordance with this invention are comprised of a polymeric material. The polymeric material may be amorphous or crystalline. The terms crystalline and crystalline polymer are used herein to mean polymers which are at least partially crystalline.

Preferred materials are crystalline polymers, for example, polyolefins such as polyethylene, polyamides, such as polyepsiloncaprolactam (nylon 6), polyundecanoamide (nylon 11), and polydodecanoamide (nylon 12), fluoropolymers, such as polyvinylidene fluride and ethylene-tetrafluoroethylene copolymers, polyesters, such as polybutylene terephthalate, and the like. Preferred polymers are high density polyethylene and polyvinylidene fluoride.

The polymer used should be of high molecular weight, the particular molecular weight preferred varies with the different polymers. For polyethylene the weight average molecular weight should be at least about 50,000 preferably at least about 80,000 and most preferably at least about 100,000.

It is preferred that the polymer have a relatively narrow molecular weight range. The molecular weight distribution (MWD) is the weight average molecular weight (Mw) divided by the number average molecular weight (Mn), that is

$$MWD = \tfrac{Mw}{Mn}$$

In general, for polyethylene, the molecular weight distribution should be in the range of about 1 to about 15, preferably about 2 to about 10 and most preferably about 2 to about 5.

The fiber can be formed initially by any fiber forming technique. The polymer can be melt-spun, or spun from a solution using conventional apparatus and processing conditions.

After formation of the fiber, while it is in a substantially undrawn state, the polymeric material is crosslinked. By substantially "undrawn" is meant that the fiber is not subjected to a drawing process following formation thereof. Crosslinking preferably is effected by irradiation, for example, by passing the fibers through an electron beam, or an ultraviolet source. The dose of irradiation depends on the particular polymer employed, the presence or absence of a cross-linking promoter, as discussed below, and the particular crosslinking promoter/polymer combination employed. Typically the irradiation dose for polyethylene fibers is about 2 to about 35 Mrads, preferably about 2 to about 25 Mrads and most preferably about 2 to about 18 Mrads.

A crosslinking promoter may be added to the polymeric material. For polymeric materials other than polyethylene, it is generally preferred to add a crosslinking promoter. Crosslinking promoters for use with polymers include, for example, the polyallyl esters of carboxylic acids and other acid moieties such as cyanuric acid, e.g., triallyl cyanurate, triallyl citrate, triallyl citrate acetate, or triallyl isocyanurate; N,N'-ethylene-bismaleimide and N,N'-phenylene-bis-maleimide; acrylic and methacrylic esters of polyhydric alcohols, e.g., dipentaerythritol hexamethacrylate; vinyl esters of polybasic acids, e.g., trivinyl cyanurate and trivinyl citrate; vinyl and allyl ethers of polyhydric alcohols, e.g., the tetraallyl ether of pentaerythritol and the tetravinyl ether of pentaerythritol; bis acrylamides, e.g., N,N'-methylenebis-acrylamide and N,N'-p-phenylene-bis-acrylamide. Preferred crosslinking promoters are triallyl isocyanurate and triallyl cyanurate.

The polymeric material may also contain additives such as stabilizers, pigments, flame retardants and the like.

The radiation dose and crosslinking promoter, if present, should be selected to provide the desired cross-linking density. Crosslinking density can be determined by measuring the gel content of the polymer. The polymer should be sufficiently crosslinked to have a gel content of at least about 5% by weight, preferably at least about 15% by weight and most preferably above about 25% by weight. The extent of crosslinking may also be determined by measuring the elastic modulus of the crosslinked material at a temperature above the polymer melting point, as described more fully below.

After the polymeric material of the fiber is crosslinked, the fiber is drawn at elevated temperature. The temperature, $T_1$, at which the fiber is drawn depends on the particular polymeric material. If the polymeric material is amorphous, the drawing temperature, $T_1$, should be above the glass transition temperature, Tg, of the polymer. For amorphous polymers, the drawing temperature $T_1$ can be any temperature above Tg at which the polymer is self-supporting and capable Of being processed. Generally, the drawing temperature, $T_1$, will be lower than the conventional extrusion temperature used for that polymer.

For crystalline polymers the drawing temperature, $T_1$, should be above the second order transition temperature, T c and below the crystalline melting temperature, Tm, of the polymer. T $_c$ is a premelting transition temperature at which semicrystalline polymers show a mechanical loss peak, as measured by mechanical spectroscopy. At this temperature hindered rotation of the polymer chains inside the polymer crystallites can occur. In the case of polyethylene, the drawing temperature should be between about 80 to about 130°C, preferably between about 90 and about 120°C and most preferably about 100 to about 120°C. The appropriate temperature at which to draw fibers of other polymers can be readily determined without undue experimentation, by one skilled in the art following the guidelines set forth above.

In drawing the fiber, it has been found that the fiber should not be permitted to stress relax to a significant degree during the step of drawing the fibers. If the fiber is permitted to stress relax during drawing of the fiber the dramatic improvement in strength provided by treating the fiber in accordance with this invention will not be realized. To minimize relaxation of the fiber, the fiber should be drawn at least about 200% per minute, preferably at least about 2000% per minute and most preferably at least about 15,000% per minute.

The fiber should be drawn to a draw ratio of at least about two, that is, to at least about twice its initial length. Generally, the higher the draw ratio, up to the breaking point of the fiber, the stronger the fiber will be. For polyethylene, it is preferred to draw the fiber at least about 8X and preferably at least about 10X of its initial pre-drawn length.

After drawing the fiber it is cooled to ambient temperature. Cooling is generally effected by air cooling. The fiber can however be run through a bath of cold water if more rapid cooling is desired.

Generally the fibers treated in accordance with this invention should be monofilaments having a diameter after drawing in the range of about 0.025 to 0.64 mm (1.0 to about 25 mils). It is to be understood that the diameter of the fiber prior to drawing will be larger than this and in some instances the initial fiber is essentially a rod.

The fibers of this invention have desirable tensile strength, Young's modulus, elongation and creep properties making them useful for a variety of applications.

The value of tensile strength varies depending in the polymer used. For polyethylene the tensile strength is above 10152 kPa (70,000 pounds per square inch), preferably about 14500 kPa (100,000 psi) and most preferably above 17400 kPa (120,000 psi). The Young's modulus for polyethylene fibers treated in accordance with this invention is greater than about 72500 kPa (500,000 psi), preferably greater than about 145000 kPa (1,000,000 psi) and most preferably greater than about 174000 kPa (1,200,000 psi). The polyethylene fibers of this invention have an elongation of at least about 2%, preferably at least about 10% and most preferably at least about 15%.

Polyethylene fibers treated in accordance with the method of this invention are novel and are particularly resistant to creep, that is resistant to permanent deformation when a force is applied and further, are capable of substantially complete recovery from any stress induced deformation. A particularly useful demonstration of the ability of the fiber of this invention it recover from deformation is to subject the fiber to a stress of 2175 kPa (15,000 pounds per square inch) at 25°C for about one hour and then remove the stress. The polyethylene fibers of this invention are capable of substantially complete recovery from the defromation induced by the 2175 kPa (15,000 psi) stress.

All fibers treated in accordance with this invention show improved creep resistance compared with fibers of the same polymeric material which have not been so treated. The creep resistance of the fibers makes them particularly useful for load bearing applications, such as in the manufacture of ropes or the like.

The fibers prepared in accordance with this invention can be used in any fiber application, particularly where high strength is desired. For example, they can be used to prepare fabrics and garments such as bullet proof vests.

The fibers have been drawn at least about 200% at $T_1$. Upon reheating of the fibers to about $T_1$, the fibers will recover toward their pre-drawing dimension. Fabrics in the form of a sleeve or other shape can be positioned around a substrate and heated to cause them to shrink into contact with the substrate. Such fabrics can be in the form of braids, woven fabrics, knitted articles or the like. All fibers of the fabric can be fibers of this invention or such fibers can be used together with any other fiber to produce the desired properties. In one configuration, a woven fabric having metal filaments or fibers in one direction and fabrics of this invention in the other can be prepared. Such fabrics in the form of a tube in which the metal fibers extend longitudinally and the fibers of this invention are radially dispersed can be positioned over a tubular substrate such as an electrical cable. When heat is applied, the fabrics of this invention shrink into contact with the substrate. The longitudinally extending metal fibers are brought closer together by shrinking of the radial fibers and act to shield the electrical substrate. Such articles are described in European Published Patent Application No. 153,823, the disclosure of which is incorporated herein by reference.

The fibers prepared in accordance with this invention can be used as reinforcement of various materials such as thermoplastic and thermosetting resins, concrete, metal structures and the like. The fibers generally will be utilized at temperatures below $T_1$ and the fiber remains in the drawn configuration.

The fibers can also be used together with a polymer matrix in which their heat shrinkability is utilized. Articles employing heat shrinkable fibers are described in U.K. Published Patent Specifications Nos. 2,134,334 and 2,135,632 the disclosures of which are incorporated herein by reference.

The fibers of this invention thus can be used to prepare heat-shrinkable articles either alone, with other fibers and/or with a polymeric matrix. The fibers of this invention in addition to their high strength, as discussed above, also exhibit high recovery force when heated above $T_1$ to cause recovery to, or toward, their undrawn configuration, that is, to cause the fibers to shrink. The high recovery force can be advantageous when the fibers are used to form an article to be applied or to be used as a driver to force an intervening article, such as a polymeric film or sheet or tow of fibers or a prepreg or the like, onto a substrate. Further, once the fibers have been recovered they generally exhibit excellent creep resistance.

The following examples illustrate the preparation of typical fibers of this invention and properties of such fibers.

Example 1

This example compares polyethylene fibers prepared in accordance with this invention, utilizing electron radiation to crosslink the polymer before drawing, with polyethylene fibers prepared by irradiation after drawing.

Fibers of polyethylene (of Alathon 7030, commercially available from duPont) containing 0.5% of a crosslinking promoter were spun on conventional melt spinning equipment. Fiber A, which is an example of the instant invention, was irradiated using an electron accelerator to a radiation dosage of 5.3 Mrads, heated to 120°C and then drawn 10 times its original length. Fiber B, which is not an example of this invention, was drawn 10 times its original length at 120°C and then irradiated to a dose of 5.3 Mrad with electrons from an electron accelerator. The tensile strength, elongation and Young's modulus were measured in accordance with the procedures of ASTM D638, incorporated herein by reference. The results are given in Table I.

Table I

|  | Fiber A | Fiber B |
|---|---|---|
| Tensile Strength kPa (psi) | 11600 (80,000) | 8992 (62,000) |
| Elongation (%) | 15 | 40 |
| Young's Modulus kPa (psi) | 30892 (213,000) | 29152 (201,000) |

The recovery stress and creep resistance of Fibers A and B were also determined as described below.

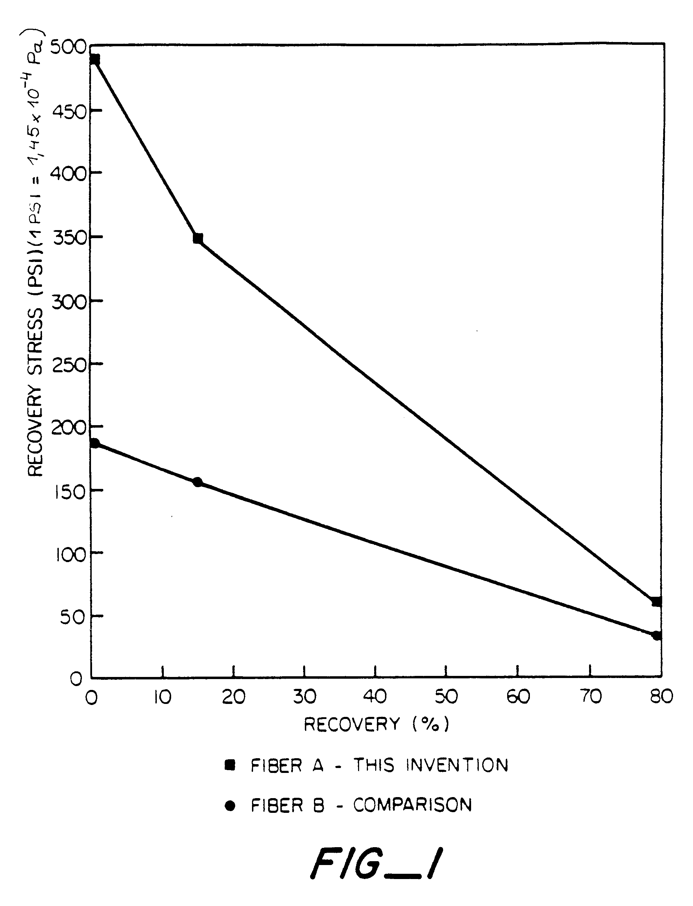

Fibers A and B were mounted in the jaws of an Instron to maintain the fibers at a given length and then heated to a temperature (150°C) above the melting point of polyethylene. At this temperature the fibers would tend to shrink, or recover, toward their undrawn length if not restrained by the Instron jaws. After 5 minutes the stress on the fiber caused by the tendency to recover (recovery stress) was measured. The results are shown in the graph of Fig. 1. As illustrated in the graph, Fiber A of this invention exhibits significantly greater recovery stress than Fiber B.

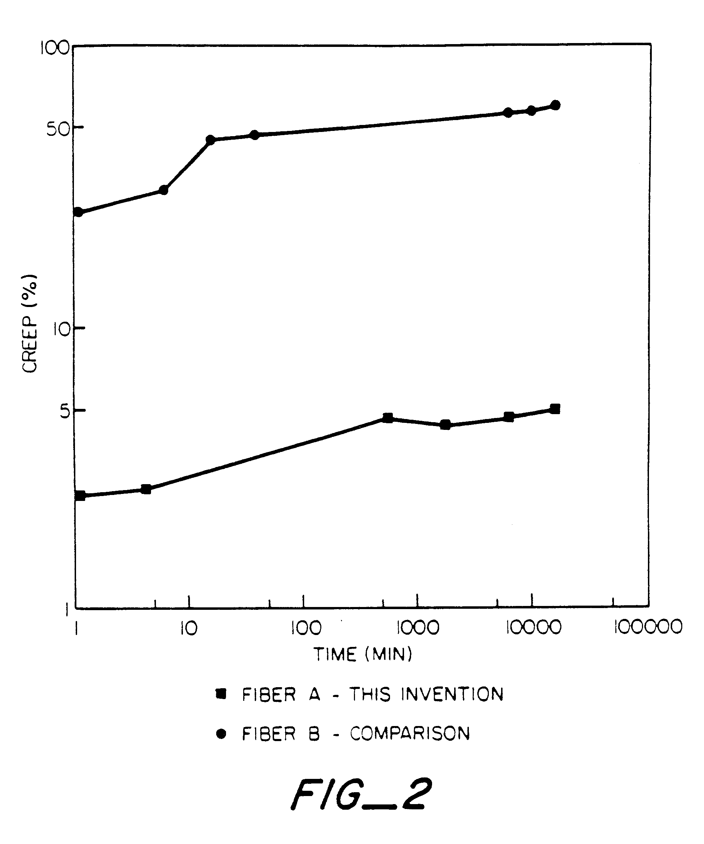

Fibers A and B were heated to 150°C and permitted to recover (shrink) 15% of the drawn length and then cooled to room temperature. The creep resistance at 60°C of the recovered fibers was determined by heating the fibers to 60°C and subjecting them to stress of 290 kPa (2,000 psi) and measuring the extent of deformation of the fibers. The results are shown in the graph of Fig. 2. As illustrated in the graph, Fiber A of this invention exhibits significantly greater resistance to creep at 60°C than does Fiber B.

Example 2

This example illustrates the room temperature creep resistance of polyethylene Fibers A which have been cross-linked then stretched in accordance with this invention, and B which have been stretched then cross-linked and fibers of other polymers prepared in accordance with this invention compared with fibers not so prepared.

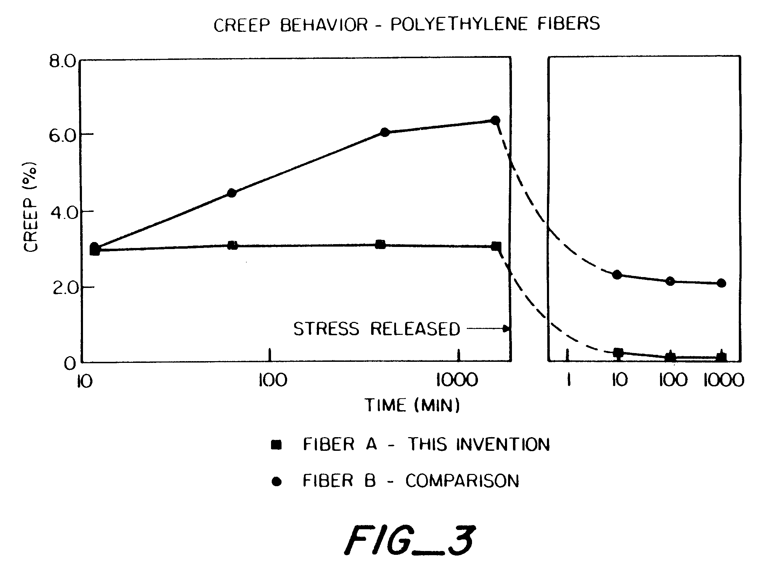

Fibers A and B as prepared in Example 1 were tested for creep resistance at room temperature under applied stress of 2175 kPa (15,000 psi). The stress was released after 1,000 minutes and the recovery from creep was measured. The results are shown in the graph of Fig. 3. In this graph it is shown that Fiber A exhibits little, if any, creep after initial elastic deformation in the first 10 minutes and after the applied stress is released, recovers substantially completely to its original configuration. A similar fiber which has been drawn to 10 times its original length was also tested for creep resistance at room temperature under an applied stress of 2175 kPa (15,000 psi). This fiber, which was typical of the prior art, elongated slowly but continuously when stressed (9% creep after 1,000 minutes) and ruptured shortly thereafter.

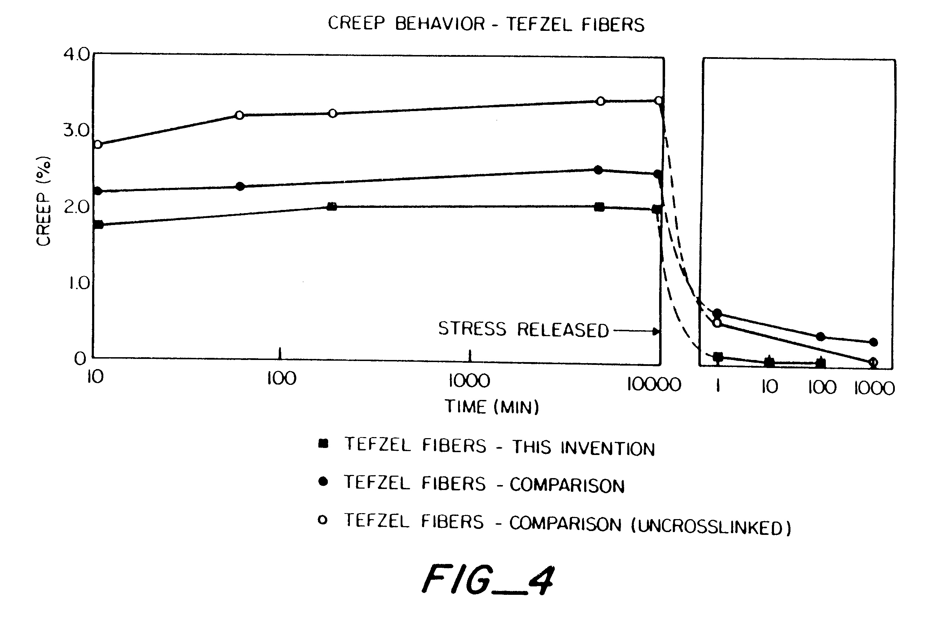

Figure 4 shows the creep behaviour of ethylene-tetrafluoroethylene copolymer (Tefzel) fibers of the instant invention (6X draw ratio) compared with both identically drawn uncross-linked and subsequently cross-linked fibers of the same original composition.

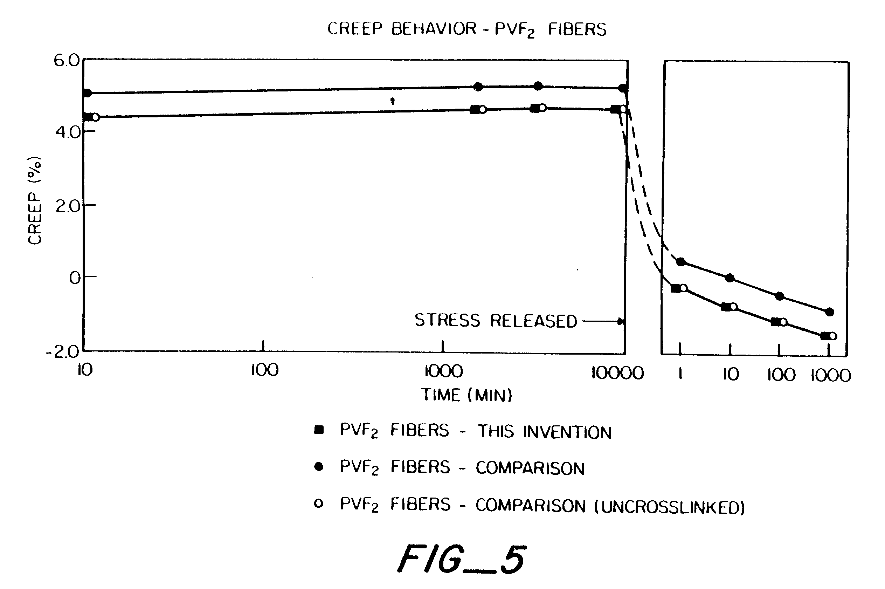

Figure 5 shows the creep behaviour of $PVF_2$ fibers of the invention (5X draw ratio) compared with both identically drawn uncross-linked and subsequently cross-linked fibers of the same original composition.

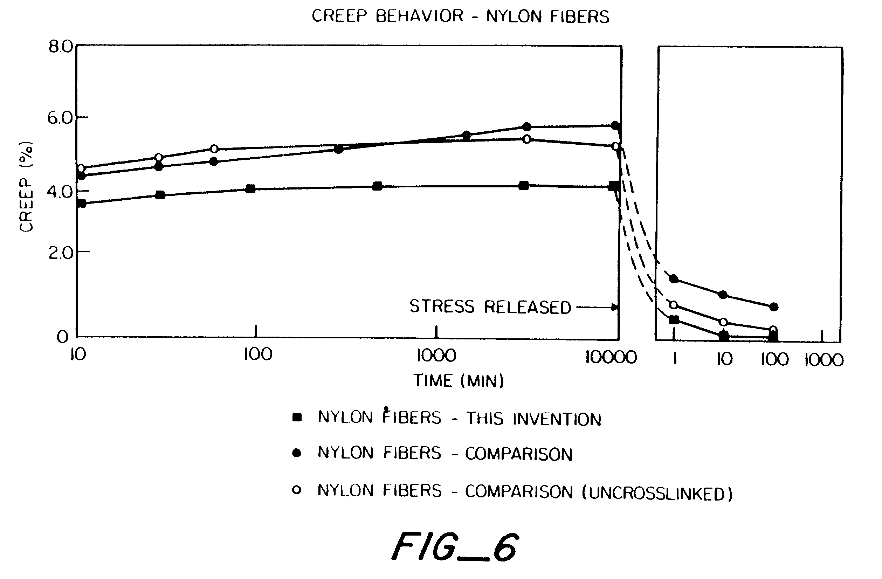

Figure 6 shows the creep behaviour of Nylon-12 fibers of the invention (4.5X draw ratio) compared with both identically drawn uncross-linked and subsequently cross-linked fibers of the same original composition.

### Example 3

This example illustrates the effect of drawing temperature, $T_1$, on polyethylene fiber properties.

Polyethylene fibers in a substantially undrawn state containing 0.5% cross-linking promoter were irradiated to a dose of about 4 Mrads by passing them through a beam of 0.8 Mv electrons. Samples of the irradiated fibers were heated to a drawing temperature, $R_1$, of 80, 100, 120 and 130°C in a glycerine bath and drawn to 10 times their original length. The room temperature tensile strength for each fiber sample was determined using the procedure specified in ASTM D638, which is incorporated herein by reference. The results obtained are:

| Sample | $T_1$ °C | Tensile Strength kPa (psi) |
|--------|------|----------------------------|
| C | 80 | 1175 (8,100) |
| D | 100 | 13343 (92,000) |
| E | 120 | 13633 (94,000) |
| F | 130 | 13343 (92,000) |

The fibres were heated to a temperature of about $T_1$ causing them to attempt to shrink, or recover, toward their undrawn configuration. The recovery stress was determined by mounting the samples in the jaws of an Instron Tensile Tester placed in an oven and constraining them from recovering, the resultant stress being measured.

The results are:

| Sample | $T_1$ °C | Recovery Stress kPa (psi) |
|--------|------|---------------------------|
| C | 80 | 39.9 (275) |
| D | 100 | 72.5 (500) |
| E | 120 | 72.5 (500) |
| F | 130 | 65.3 (450) |

These results indicate that for polyethylene the drawing temperature should be, for example, above about 100°C, that is above $T_c$, to obtain the advantageous results of this invention.

### Example 4

This example illustrates the advantage of using a polymer with a narrow molecular weight distribution in preparing fibers of this invention.

Fibers G and H were prepared from vinylidene fluoride polymers ($PVF_2$) of different molecular weight distributions. Fiber G of Solef 1012 having a relatively narrow molecular weight distribution compared to Fiber H of Kynar 460. The fibers, which both contained 0.5% cross-linking promoter, were cross-linked by irradiation to a dose sufficient to provide a hot modulus $M_{100}$ of 2.6 kPa (18 psi). This modulus test measures the stress required to elongate a resin by 100% at a temperature between the decomposition temperature and the crystalline melting point for PVF$_2$. The modulus measurement expressed as the M$_{100}$ value can be calculated by:

$$M_{100} = \frac{\text{stress in kg (pounds) to elongate sample by 100\%}}{\text{initial cross-sectional area in cm}^2 \text{ (square inches)}}$$

Should the sample rupture prior to 100% elongation, the M$_{100}$ is calculated using the equation:

$$M_{100} = \frac{\dfrac{\text{stress in kg (pounds) to elongate sample by 100\%}}{\text{elongation at rupture}}}{\text{intial cross-sectional area in cm}^2 \text{ (square inches)}}$$

The fibers were then heated to 150°C, which is above the T$_c$ of PVF$_2$ and drawn 5 times their original length. The tensile strength and elongation were measured in accordance with ASTM D638. The results obtained are:

| Fiber | Tensile Strength kPa (psi) | Elongation (%) |
|-------|----------------------------|----------------|
| G | 15809 (109,000) | 25 |
| H | 11458 ( 79,000) | 20 |

Example 5

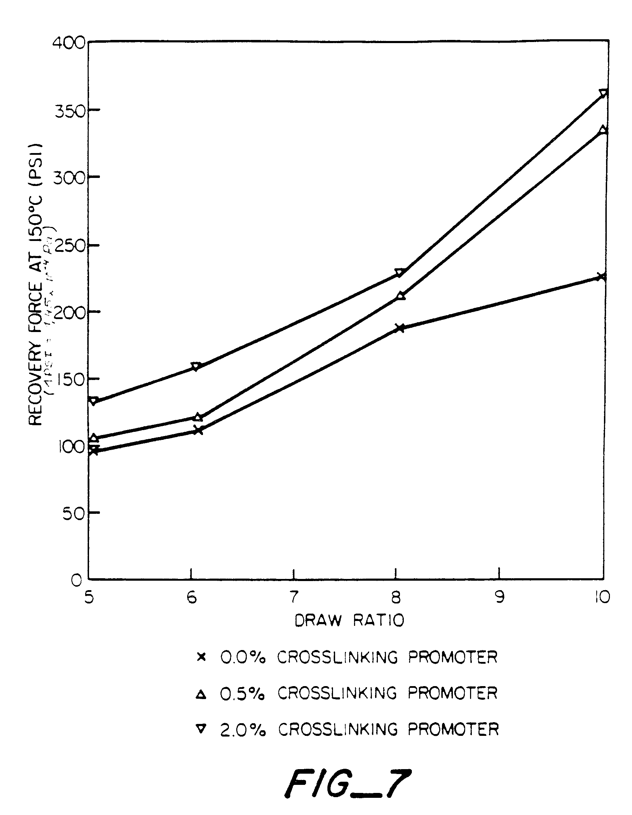

This example illustrates the effect of varying amounts of cross-linking promoter in ultra-violet cross-linked polyethylene fibers of this invention. Polyethylene containing 0.5 percent 1,4-dichlorobenzophenone and 0, 0.5 and 2.0 percent triallylisocyanurate were cross-linked by exposure to ultra-violet radiation. The fibers were then drawn 5X, 6X, 8X or 10X and the recovery force measured as described in Example 1. The results are shown in the graph of Fig. 7.

Example 6

This example illustrates one manner of orienting polyethylene taught in the prior art and thus is not an example of the instant invention. Samples of Marlex 6006 (M$_n$ 1.52 X 10$^4$ M$_w$/M$_n$ 7.25) fibers were manually stretched to twelve times their original length in boiling water using tweezers, allowing them to relax peridically without tension during the drawing process. The resultant fibers had a tensile strength of about 8702 kPa (60,000 psi).

Example 7

This example illustrates the preparation of a typical fiber of this invention. Polyethylene fiber prepared from Alathon 7030 with addition of 0.5% of a cross-linking promoter was irradiated by high energy electron beam to provide a hot modulus M$_{100}$ of 3.0 kPa (21 psi). The cross-linked fiber was drawn continuously at 120°C to 10 times its original length to a final diameter of 0.05 mm (0.002 inch). The fiber has a room temperature tensile strength of 29007 kPa (2.0 X 10$^5$ psi) and Young's modulus of 174039 kPa (1.2 X 10$^6$ psi) and an ultimate elongation of 9%.

Example 8

This example illustrates the treatment of ethylenetetrafluoroethylene (ETFE) copolymer fibers, poly-vinylidene fluoride (PVF$_2$) fibers, polyethylene (PE) fibers and nylon 12 fibers in accordance with this invention.

Polymer compositions containing a cross-linking promoter were spun into fibers which were irradiated by means of an electron accelerator (E) or by ultra-violet radiation (UV), as indicated in the following table, to provide an $M_{100}$, determined as described above, having the value listed in the following table. The fibers were heated to the draw temperature indicated, and drawn to the draw ratio given in the table. The room temperature tensile stength, ultimate elongation and Young's modulus were determined by ASTM D638. The results are given in the table.

| Polymer | Irradiation | $M_{100}$ kPa (psi) | Draw Temp (°C) | Draw Ratio | Tensile Str. kPa (psi) | Elongation (%) | Young's Modulus kPa (psi) |
|---|---|---|---|---|---|---|---|
| ETFE | E | 2.6 (18) | 215°C | 6X | 11313 (78,000) | 10 | 117766 (812,000) |
| PVF2 | E | 2.6 (18) | 150°C | 5X | 15809 (109,000) | 25 | 47860 (330,000) |
| PVF2 | E | 2.2 (15*) | 150°C | 5X | 11893 (82,000) | -- | --------------- |
| PE | UV | 2.5 (17) | 120°C | 10X | 16679 (115,000) | 11 | 104859 (723,000) |
| PE | E | 2.0 (14*) | 120°C | 10X | 15954 (110,000) | -- | --------------- |
| Nylon 12 | UV | 1.2 (8) | 120°C | 4X | 8702 (60,000) | 20 | 47281 (326,000) |

* These fibers did not contain a crosslinking promoter.

Example 9

This example shows that while for uncrosslinked drawn fibers which are not part of the instant invention, better tensile strengths are obtained from polymers of high molecular weight and higher Mw/Mn ratio, best results, particularly at higher draw ratios, were obtained with crosslinked drawn fibers of the instant invention prepared using high molecular weight low Mw/Mn ratio polyethylenes.

Fibers of substantially unoriented polyethylene containing a crosslinking promoter were prepared by melt spinning. One of the fiber samples was crosslinked by exposure to 5 Mrads or less of ionizing radiation from an electron accelerator.

8

The fibers were heated to 120°C and drawn from 4 to about 14 times their original length. The tensile strength of the fibers is shown as a function of draw ratio in Table I.

### Table I

| Polyethylene | Crosslinked | Tensile Strength kPa (psi x $10^{-3}$) at Draw Ratio of: | | | | |
|---|---|---|---|---|---|---|
| | | 5 | 6 | 8 | 10 | 13 |
| I Alathon 7030 | yes | 6.1 (42) | 7.5 (52) | 11.6 (80) | 16.0 (110) | 18.9 (130) |
| J Alathon 7030 | no | -- | 5.4 (37) | 7.5 (52) | 12.2 (84) | 14.8 (102) |
| K Marlex 6006 | no** | -- | 6.8 (47) | 9.9 (68) | 12.9 (89) | * |
| L Hoechst GM9255 (Mn, 1.2 x $10^4$ Mw/Mn, 21) | no** | 5.4 (37) | 6.4 (44) | 11.3 (78) | 12.5 (86) | * |

\*   Samples broke at less than 13X draw ratio
\*\*  Irradiated samples gave results intermdiate between those of the uncrosslinked fibers and I but ruptured at lower draw ratios.

### Claims

1. A method of treating a fiber of polymeric material which comprises the steps of: (a) cross-linking the polymeric material; (b) heating the fiber; (c) drawing the fiber; and (d) cooling the fiber;

   characterised by in step (b), heating the fiber to a temperature, $T_1$, which i) in the event the polymer is amorphous, is above the glass transition temperature, Tg, of the polymer and, ii) in the event the polymer is crystalline, is above the second order transition temperature, Tc, and below the crystalline melting temperature, Tm, of the polymer;

   and in step (c), drawing the fiber to a draw ratio of at least about two at a rate of at least about 200% per minute; with the proviso that when the polymeric material is polyethylene, it has a molecular weight distribution (Mw/Mn) within the range from 2 to 10.

2. A method in accordance with Claim 1, wherein the polymeric material is crystalline.

3. A method in accordance with Claim 1, wherein said polymeric material is selected from the group consisting of polyethylene, polyvinylidene fluoride, polyepsilon-caprolactam, polundecanoamide, polydodecanoamide, polybutylene terephthalate, and ethylene-tetrafluoroethylene copolymers.

4. A method in accordance with Claim 1, wherein the polymeric material is a polyethylene having a molecular weight distribution, Mw/Mn, of less than 15, wherein Mw is the weight average molecular weight and Mn is the number average molecular weight.

9

5. A method in accordance with Claim 1 wherein the polymer is polyethylene and the fiber is heated in step (b) to a temperature within the range of about 80 to about 130°C, preferably in the range of about 100 to about 130°C.

6. A method in accordance with Claim 1 wherein the polymer is crosslinked by irradiation.

7. A method in accordance with Claim 6, wherein the fiber is formed form a polymer composition containing a crosslinking promoter, preferably triallylisocyanurate.

8. A method in accordance with Claim 1, wherein the fiber is drawn at least 8 times, preferably at least 10 times, its initial length.

9. A method in accordance with Claim 1, wherein the polymer is polyethylene and a fiber having a tensile strength of at least 10152kPa (70,000 psi), preferably at least about 14500kPa (100,000 psi) is obtained.

10. A method in accordance with Claim 1 wherein the fiber is drawn at a rate of at least about 2000% per minute, preferably at least about 15000% per minute.

**Revendications**

1. Procédé de traitement d'une fibre de matière polymérique, qui comprend les étapes consistant : (a) à provoquer la réticulation de la matière polymérique ; (b) à chauffer la fibre ; (c) à étirer la fibre ; et (d) à refroidir la fibre ;
caractérisé par, dans l'étape (b), le chauffage de la libre à une température, $T_1$, qui i) dans le cas où le polymère est amorphe, est supérieure à la température de transition vitreuse, Tg, du polymère, et ii) dans le cas où le polymère est cristallin, est supérieure à la température de transition de second ordre, Tc, et inférieure à la température de fusion cristalline, Tm, du polymère ;
et, dans l'étape (c), l'étirage de la fibre à un rapport d'étirage d'au moins environ deux à une vitesse d'au moins environ 200 % par minute ; sous réserve que, lorsque la matière polymérique est un polyéthylène, elle possède une distribution des poids moléculaires (Mp/Mn) comprise dans l'intervalle de 2 à 10.

2. Procédé suivant la revendication 1, dans lequel la matière polymérique est cristalline.

3. Procédé suivant la revendication 1, dans lequel la matière polvmérique est choisie dans le groupe comprenant le polyéthylène, le poly(fluorure de vinylidène), le polyepsiloncaprolactame, le polyundécanoamide, le polydodécanoamide, le polytéréphtalate de butylène et des copolymères éthylène-tétrafluoréthylène.

4. Procédé suivant la revendication 1, dans lequel la matière polymérique est un polyéthylène ayant une distribution des poids moléculaires, Mp/Mn, inférieure à 15, Mp représentant la moyenne pondérale du poids moléculaire et Mn représentant la moyenne numérique du poids moléculaire.

5. Procédé suivant la revendication 1, dans lequel le polymère est un polyéthylène et la fibre est chauffée dans l'étape (b) à une température comprise dans l'intervalle d'environ 80 à environ 130°C, de préférence d'environ 100 à environ 130°C.

6. Procédé suivant la revendication 1, dans lequel le polymère est réticulé par irradiation.

7. Procédé suivant la revendication 6, dans lequel la fibre est formée à partir d'une composition polymérique contenant un activateur de réticulation, de préférence l'isocyanurate de triallyle.

8. Procédé suivant la revendication 1, dans lequel la fibre est étirée à une longueur égale à au moins 8 fois, de préférence au moins 10 fois, sa longueur initiale.

9. Procédé suivant la revendication 1, dans lequel le polymère est un polyéthylène et une fibre ayant une résistance à la traction d'au moins 10 152 kPa (70 000 lb/in$^2$), de préférence d'au moins environ 14 500 kPa (100 000 lb/in$^2$), est obtenue.

10

**10.** Procédé suivant la revendication 1, dans lequel la fibre est étirée à une vitesse d'au moins environ 2000 % par minute, de préférence d'au moins environ 15 000 % par minute.

**Patentansprüche**

**1.** Verfahren zum Behandeln einer Faser aus Polymermaterial, das folgende Schritte umfaßt: (a) Vernetzen des Polymermaterials; (b) Erwärmen der Faser; (c) Recken der Faser; und (d) Abkühlen der Faser;

gekennzeichnet durch Erwärmen der Faser in Schritt (b) auf eine Temperatur $T_1$, die i), wenn das Polymer amorph ist, über der Glasübergangstemperatur Tg des Polymers liegt und ii), wenn das Polymer kristallin ist, über der Phasenübergangstemperatur zweiter Ordnung Tc und unter der kristallinen Schmelztemperatur Tm des Polymers liegt;

und Recken der Faser in Schritt (c) auf ein Reckverhältnis von wenigstens etwa Zwei mit einer Geschwindigkeit von wenigstens ca. 200 %/min; mit der Maßgabe, daß, wenn das Polymermaterial Polyethylen ist, es eine Molekulargewichtsverteilung (Mw/Mn) im Bereich von 2-10 hat.

**2.** Verfahren nach Anspruch 1, wobei das Polymermaterial kristallin ist.

**3.** Verfahren nach Anspruch 1, wobei das Polymermaterial aus der Gruppe ausgewählt ist, die aus Polyethylen, Polyvinylidenfluorid, Poly-epsilon-caprolactam, Polyundecanoamid, Polydodecanoamid, Polybutylenterephthalat und Ethylen/Tetrafluorethylen-Copolymeren besteht.

**4.** Verfahren nach Anspruch 1, wobei das Polymermaterial ein Polyethylen mit einer Molekulargewichtsverteilung Mw/Mn von weniger als 15 ist, wobei Mw das Gewichtsmittel des Molekulargewichts und Mn das Zahlenmittel des Molekulargewichts ist.

**5.** Verfahren nach Anspruch 1, wobei das Polymer Polyethylen ist und die Faser in Schritt (b) auf eine Temperatur im Bereich von ca. 80 °C bis ca. 130 °C, bevorzugt im Bereich von ca. 100 °C bis ca. 130 °C, erwärmt wird.

**6.** Verfahren nach Anspruch 1, wobei das Polymer durch Bestrahlung vernetzt wird.

**7.** Verfahren nach Anspruch 6, wobei die Faser aus einer Polymermasse gebildet wird, die einen Vernetzungsbeschleuniger, bevorzugt Triallylisocyanurat, enthält.

**8.** Verfahren nach Anspruch 1, wobei die Faser wenigstens um das 8fache, bevorzugt wenigstens um das 10fache, ihrer Anfangslänge gereckt wird.

**9.** Verfahren nach Anspruch 1, wobei das Polymer Polyethylen ist und eine Faser mit einer Zugfestigkeit von wenigstens 10.152 kPa (70.000 psi), bevorzugt wenigstens ca. 14.500 kPa (100.000 psi), erhalten wird.

**10.** Verfahren nach Anspruch 1, wobei die Faser mit einer Geschwindigkeit von wenigstens ca. 2000 %/min, bevorzugt wenigstens ca. 15000 %/min, gereckt wird.

FIG_1

FIG_2

CREEP BEHAVIOR - POLYETHYLENE FIBERS

FIG_3

■ FIBER A - THIS INVENTION

● FIBER B - COMPARISON

## CREEP BEHAVIOR - TEFZEL FIBERS

STRESS RELEASED →

CREEP (%)

TIME (MIN)

■ TEFZEL FIBERS - THIS INVENTION

● TEFZEL FIBERS - COMPARISON

○ TEFZEL FIBERS - COMPARISON (UNCROSSLINKED)

## *FIG_4*

EP 0 216 863 B1

CREEP BEHAVIOR - PVF$_2$ FIBERS

■ PVF$_2$ FIBERS - THIS INVENTION

● PVF$_2$ FIBERS - COMPARISON

○ PVF$_2$ FIBERS - COMPARISON (UNCROSSLINKED)

TIME (MIN)

CREEP (%)

STRESS RELEASED

FIG_5

CREEP BEHAVIOR - NYLON FIBERS

STRESS RELEASED →

TIME (MIN)

■ NYLON FIBERS - THIS INVENTION

● NYLON FIBERS - COMPARISON

○ NYLON FIBERS - COMPARISON (UNCROSSLINKED)

FIG_6

FIG_7